# EUROPÄISCHE PATENTSCHRIFT

(11) **EP 1 110 005 B1**
(45) Veröffentlichungstag und Bekanntmachung des Hinweises auf die Patenterteilung: **14.05.2003**
(21) Anmeldenummer: 99944440.9
(22) Anmeldetag: 19.08.1999
(51) Int. Cl.: F16C 29/06

(54) **LINEARWÄLZLAGER**
LINEAR ROLL BEARING
PALIER A ROULEMENT LINEAIRE

(30) Priorität: 11.09.1998 DE 19841667
(43) Veröffentlichungstag der Anmeldung: 27.06.2001
(73) Patentinhaber: INA-Schaeffler KG, 91074 Herzogenaurach (DE)
(72) Erfinder: GREINER, Heinz, D-73061 Ebersbach (DE)
(86) Internationale Anmeldenummer: EP9906074
(87) Internationale Veröffentlichungsnummer: WO00015968

(56) Entgegenhaltungen:
- EP-A- 0 802 337
- DE-A- 4 318 427
- DE-U- 9 311 059
- US-A- 5 755 516

## Beschreibung

### Gebiet der Erfindung

Die Erfindung betrifft ein Linearwälzlager mit einem Führungswagen, entsprechend aller Merkmale aus dem Oberbegriff des Anspruchs 1 (DE 43 18427 A).

### Hintergrund der Erfindung

Bei Linearwälzlagern mit unbegrenztem Hub stellt die Ausleitung der Wälzkörper aus der Tragzone, die Umlenkung, die Rückführung und Wiedereinleitung in die Tragzone zusammen mit der sicheren Rückhaltung der Kugeln im nicht montierten Zustand des Wagens eine schwierig zu lösende Aufgabe dar. Üblicherweise werden innere Umlenkteile, äußere Umlenkteile und Rückhaltestege verwendet, die an ihren Fügestellen und am Übergang zum Tragkörper zu Störungen des Kugelumlaufes führen können, weil durch die Vielzahl der Teile die Bildung eines kantenlosen Umlaufes erschwert wird. Außerdem bedeutet die Vielzahl der Teile einen erhöhten Aufwand an Werkzeug-, Lager- und Montagekosten. Die exakte Zuordnung der Umlenkteile zu den die Wälzkörper abstützenden Teilen des Führungswagens ist häufig ein unbefriedigender Kompromiß mit der Wirtschaftlichkeit.

Bekannt sind neben Profilschienenführungen mit einer Vielzahl von Einzelteilen auch Profilschienenführungen, bei denen die inneren Umlenkungen mit angeformt sind und bei denen die Rückläufe mit Kunststoff ausgekleidet sind. Es wird so ein nahezu kantenloser Umlauf gebildet. Nachteilig sind an diesen Ausführungen die sehr hohen Werkzeugkosten, die aus der notwendigen Abdichtung gegenüber Traglaufbahnen und Umgebung resultieren, das Problem der Einbringung in und Entnahme des fertigen Teiles aus der heißen Form und die Kosten, die durch Abdicht- und Positionierflächen am die Traglaufbahnen beinhaltenden Teil jeweils entstehen.

Aus der Druckschrift DE 33 04 895 C2 ist ein Linearwälzlager bekannt, bei welchem der Kugelumlaufschuh oder Lagerkörper angesetzte Blechteile aufweist, und zwar einen W-förmigen Kugelhalter für die tragenden Kugeln und eine Abdeckung mit U-förmigem Querschnitt, welche Kugelführungsrillen für die nicht belasteten, rücklaufenden Kugeln nach außen verschließt. Infolge dieser zusätzlichen Blechteile ergibt sich eine aufwendige Bauweise und Montage des Kugelumlaufschuhs.

Aus der Druckschrift DE 30 19 131 A1 ist ein Linearwälzlager der eingangs genannten Art bekannt. Bei diesem sind an den als Halteplatten ausgebildeten Führungsteilen in den Rücklaufbereichen für die Kugeln längsgerichtete durchgehende Öffnungen ausgebildet, die die Rücklaufkanäle bilden. Daher ist hier jedes Führungsteil nicht nur mit einer nach außen weisenden verengten Öffnung versehen, sondern auch zu dem als Führungswagen wirkenden Maschinenelement hin offen. Durch diese Öffnung ragen die Kugeln hindurch und werden von längsgerichteten Laufbahnen geführt, die als Rillen in dem Maschinenelement eingearbeitet werden müssen, so daß sich zusätzliche Bearbeitungs- und Werkzeugkosten ergeben.

### Zusammenfassung der Erfindung

Der Erfindung liegt die Aufgabe zugrunde, ein Linearwälzlager mit möglichst wenigen, gefügten Teilen zu schaffen, das einem Lager mit angeformten oder ausgespritzten Kunststoffbereichen nahekommt, ohne die Nachteile der hohen Werkzeugkosten und die Kosten für Abdichtflächen am Tragkörper zum Ausspritzen aufzuweisen.

Diese Aufgabe wird erfindungsgemäß dadurch gelöst, daß die Öffnung sich auch über die gesamte Länge des jeweiligen Umlenkkanals erstreckt, wobei die Umlenkkanäle und der Rücklaufkanal an ihren von der Öffnung abgewandten Längsseiten einen an der Führung der Kugeln mitwirkenden geschlossenen Boden aufweisen und die Öffnung im Bereich der Umlenkung und Rückführung für die Kugeln am Führungsteil von einer Verengung der Kanäle gebildet ist, welche die Kugelrückhalterung und Führung übernimmt, wobei im Bereich einer Traglaufbahn des Führungsteils die Rückhalterung jeweils durch einen Rückhaltesteg erfolgt, der mit einer Rückhaltekontur einen Abstand bildet, der kleiner als der Durchmesser der Kugeln ist.

Somit sind die Umlaufbahnen einseitig mit einem geschlossenen Boden versehen und die Kanäle sind auf der dem Boden gegenüberliegenden Seite so verengt, daß die Kugeln vollständig in einem Kanal geführt sind und weder seitlich noch vertikal ausweichen können.

Beim Umlauf liegen die Wälzkörper an jeweils wenigstens drei Punkten des einen Führungsteils an. So wird im Zusammenhang mit den Zentrierungen eine dem Ausspritzen in einem Werkzeug mit exakt fixiertem Tragkörper vergleichbare Präzision des Umlaufs erreicht. Besonders im Einlauf in die Tragzone trifft die Kugel so ohne seitlichen und vertikalen Versatz in den von Führungswagen und Schiene gebildeten Kreisquerschnitt der Tragzone. Deshalb wird auch durch die dachförmige Schräge direkt an den Traglaufbahnen des Führungswagens eine exakte Lagezuordnung erreicht.

Diese Zentrierung - vorzugsweise mit den Traglaufbahnen geschliffen - sorgt dafür, daß an der wichtigsten Stelle, dem Übergang von der Umlenkung in die Tragzone, kaum ein meßbarer Versatz auftritt. Selbst direkt an der Übergangsstelle zum Tragkörper verhindert die über die Mitte hochgezogene Kante der Umlenkungsinnenseite, daß die Kugel hochsteigen kann.

Mit der Erfindung ist auch der Vorteil verbunden, daß an einem Tragkörper bzw. Führungswagen für jede Längsseite der Führungsschiene nur ein einziges Kunststoff- oder Metallteil angebracht zu werden braucht, das komplette Umlenkbahnen und die Kugelrückhalterung oder komplette Umlenkbahnen, Rücklaufkanäle und die Kugelrückhalterung enthält und das durch jeweils zwei identische Deckel geschlossen wird und durch eine an drei Punkten durch Übermaß abgestützte eindeutige Lagezuordnung zu den Traglaufbahnen einen nahezu kantenlosen, präzise den Traglaufbahnen zugeordneten Umlauf ermöglicht.

Mit der Erfindung erhält man ein Lager mit Umlaufbereichen, die es durch geeignete Hinterschnitte ermöglichen, die Wälzkörper mit nur einem einzigen Teil umzulenken, zurückzuführen und vor dem Herausfallen vor oder bei der Montage zu bewahren. Dieses Teil kann dabei jeweils aus einem Kunststoff oder einem Metall bestehen.

Das Linearwälzlager kann als vierreihiges Kugellager ausgebildet sein, für Führungswagen, die zwei Tragbereiche aufweisen, oder als zweireihiges Kugellager für Wagen, die sich nur auf einer Schienenseite abstützen. An den die Traglaufbahnen enthaltenden Stegen oder direkt an einseitig abgestützten Tragwagen kann jeweils zwischen oder neben zwei benachbarten Traglaufbahnen eine konvexe Nase ausgebildet sein bei Führungen mit eng zusammenliegenden Laufbahnen. Bei weiter auseinanderliegenden Laufbahnen kann die Fixierkontur auch konkav gewählt werden oder mit rechteckigem Querschnitt ausgeführt sein. In Verbindung mit Anfasungen oder Ansenkungen der Rücklaufbohrungen bei gebohrten Rückläufen oder mit Haltekonturen bei nicht gebohrten Rückläufen wird, wenn die Abstände am Tragkörper größer als am Führungsteil gewählt werden, eine exakte Fixierung erreicht. Zudem sind die Teile infolge ihres Formschlusses bei Stößen gegen Verschieben gesichert, so daß eine Veränderung des Kanalquerschnitts aus diesem Grunde nicht erfolgen kann. Das Umlenk- und Führungsteil kann auch zweiteilig sein, wobei die beiden Teile z. B. durch Ultraschallschweißen verbunden werden. Damit können vier-, sechs- oder achtreihige Führungen hergestellt werden.

### Kurze Beschreibung der Zeichnung

Ausführungsbeispiele der Erfindung sind in der Zeichnung dargestellt und werden im folgenden näher beschrieben. Es zeigen:
- Figur 1: einen Querschnitt durch ein gefügtes, vorbekanntes Lager;
- Figur 2: einen Längsschnitt durch ein ausgespritztes, innere Umlenkungen und Rückführbahnen enthaltendes vorbekanntes Lager;
- Figur 3: einen Teilorthogonallängsschnitt durch ein erfindungsgemäßes Lager;
- Figur 4: einen Querschnitt durch ein erfindungsgemäßes vierreihiges Lager;
- Figur 5: einen Querschnitt durch ein erfindungsgemäßes sechsreihiges Lager;
- Figur 6: eine Stirnansicht eines erfindungsgemäßen Lagers nach Figur 3;
- Figur 7: einen Teilquerschnitt durch ein erfindungsgemäßes Lager nach Figur 6;
- Figur 8: eine perspektivische Darstellung eines weiteren vorbekannten Linearwälzlagers;
- Figur 9: einen Querschnitt durch das Linearwälzlager nach Figur 8;
- Figur 10: schematisch einen Teilquerschnitt durch ein erfindungsgemäßes Linearwälzlager.

### Ausführliche Beschreibung der Zeichnung

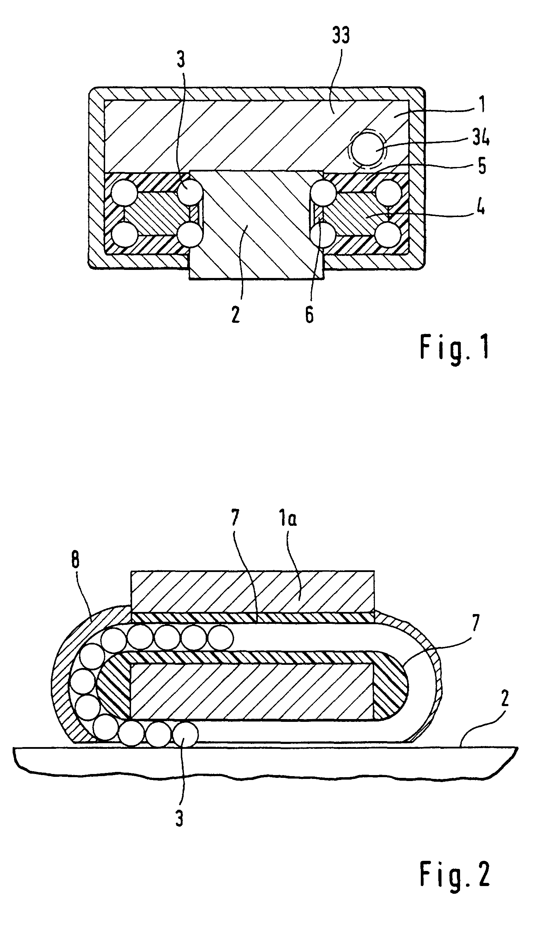

Ein in Figur 1 dargestelltes vorbekanntes Linearwälzlager besteht aus einer Führungsschiene 2 und einem daran über Kugeln 3 abgestützten, in Schienenlängsrichtung verfahrbaren Führungswagen 1. Dieser hat einen die Führungsschiene 2 abdeckenden und teilweise umgebenden Grundkörper 33 und zwei innere Umlenkungen 4 pro Laufbahnseite, zwei äußere Umlenkungen 5 pro Laufbahnseite und einen Rückhaltesteg 6 pro Laufbahnseite. Die inneren Umlenkungen 4 werden dabei durch Ausrichten während der Montage über die äußeren Umlenkungen 5 am Grundkörper 33 mittels Schrauben 34 befestigt. Der Rückhaltesteg 6 wird in die äußeren Umlenkungen 5 gesteckt.

Ein in Figur 2 dargestelltes vorbekanntes Linearwälzlager zeigt einen Führungswagen 1a, der sich über Kugeln 3 an der Führungsschiene 2 abstützt und an dem durch Ausspritzen eine Führungskontur 7 kantenlos angeformt ist. Ein Deckel 8 schließt auf jeder Seite den Laufbahnkanal.

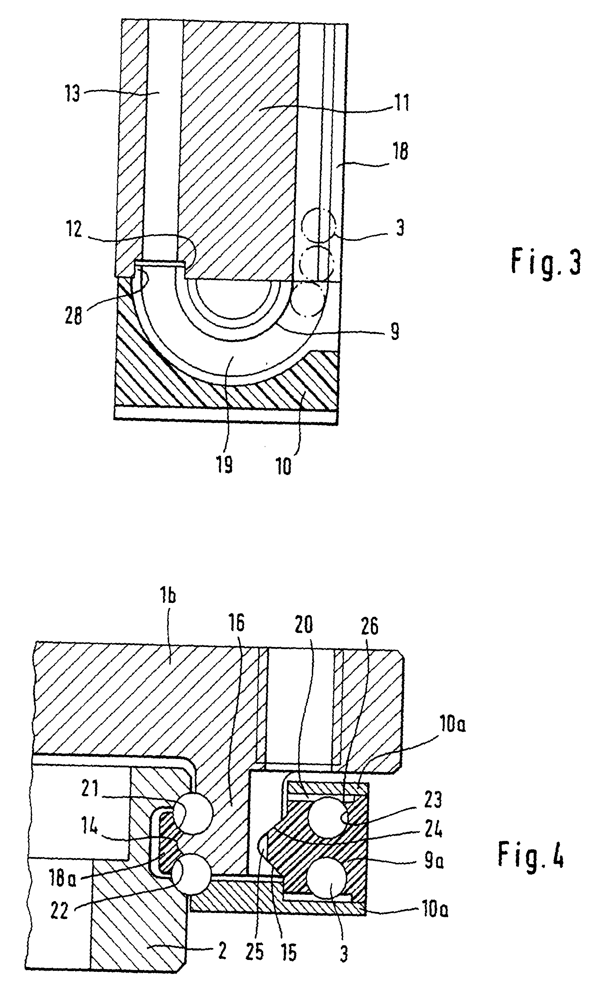

Gegenüber diesen beiden vorbekannten Linearwälzlagern zeigt Figur 3 ein erfindungsgemäßes Linearwälzlager, bei welchem ein Tragabschnitt 11 ein jeweils zwei Umlenkbahnen 19 und einen Rückhaltesteg 18 enthaltendes einstückiges Führungsteil 9 aufweist. Der Deckel 10 verschließt dabei den Raum der Laufbahnen des Führungsteils 9. Ansätze 28 am Führungsteil 9 zentrieren und fixieren das Führungsteil 9 an dem Rückläufe 13 enthaltenden Tragabschnitt 11 in Ausnehmungen 12 (Ansenkungen), in welchen die Ansätze 28 eingesteckt sind.

Figur 4 zeigt ein erfindungsgemäßes vierreihiges Linearlager, bei dem das Führungsteil 9a jeweils zwei kantenlos gebildete Kanäle enthält, welche die Umlenkung und Rückführung der Kugeln 3 bewirken. Die Rückhaltung der Kugeln 3 wird gebildet, indem die Rückführbahnen und/oder die Umlenkbahnen oben und unten jeweils eine Verengung 26 aufweisen. Auf der Traglaufbahnseite ist ein Rückhaltesteg 18a kantenlos angeformt. Das Führungsteil 9a wird durch eine Ausnehmung 25 an einem Tragkörperabschnitt 16 über Schrägen 24 und Rundungen 21 und 22, die am Rückhaltesteg 18a angebracht sind und eine Nase 14 umgreifen, fixiert und gehalten. Deckel 10a schließen die Kanäle 23 ab. Sie können längsgeteilt oder quergeteilt sein und einen großen Raum 20 für Schmierstoff bilden.

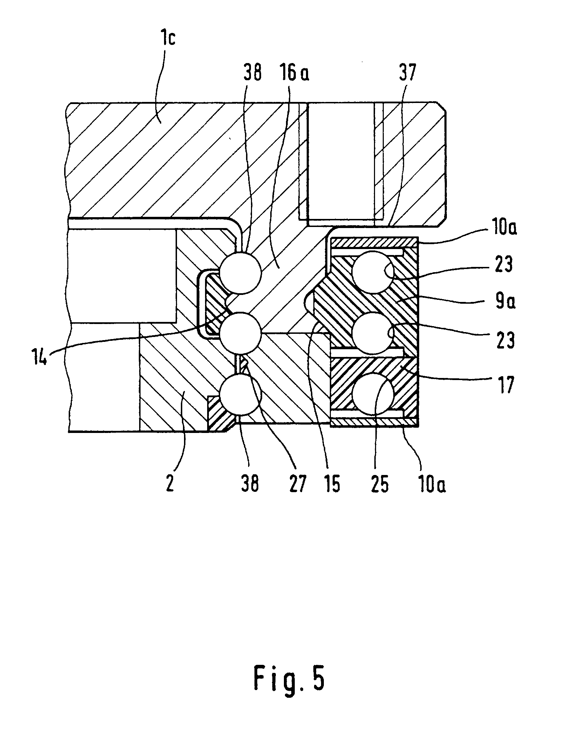

Figur 5 zeigt ein erfindungsgemäßes sechsreihiges Linearwälzlager, das unterhalb einer Rückhaltekante 37 des Führungswagens 1c ein Führungsteil 9a mit in sich geschlossenen Umlaufbahnen nach Figur 4 aufweist und zusätzlich ein einseitig offenes verengtes Führungselement 17 enthält, welches ein komplettes, Umlenkbahnen und eine Rückführbahn aufweisendes Bauteil ist, das an dem Führungsteil 9a befestigt ist. Eine zusätzliche Zentrierung 27 am Tragkörperabschnitt 16a kann die Position zu diesem verbessern. Deckel 10a schließen die Kanäle 23 ab.

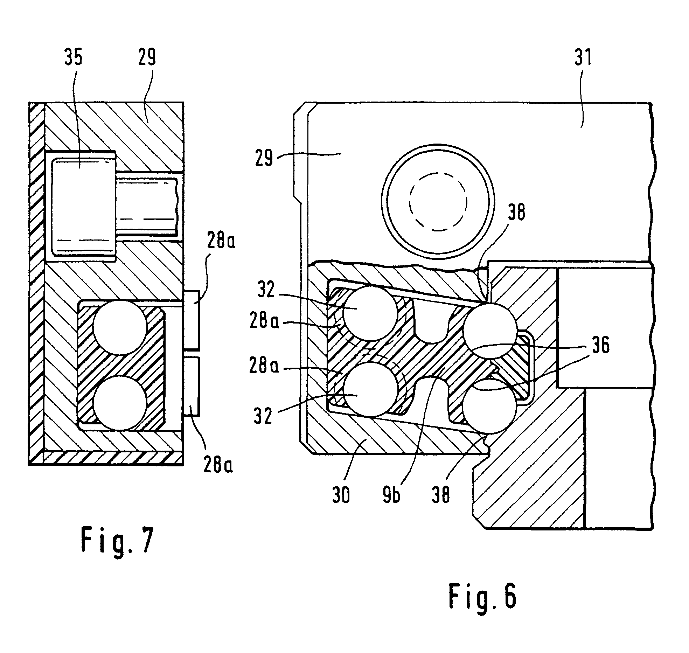

In Figur 6 wird ein erfindungsgemäßes vierreihiges Linearwälzlager gezeigt, bei dem ein Tragkörper 31 mit einem Tragbahnabschnitt 30 gebohrte Rücklaufkanäle 32 enthält und bei dem ein jeweils verengtes, Umlenkbahnen und einen Rückhaltesteg enthaltendes Führungsteil 9b über wenigstens teilweise umlaufende Ansätz 28a verfügt, die in Ausnehmungen (Ansenkungen) der Rücklaufbohrungen eingreifen. Ein Deckel 29 enthält Schrauben 35 für die Befestigung des Führungsteils 9b am Tragkörper 31.

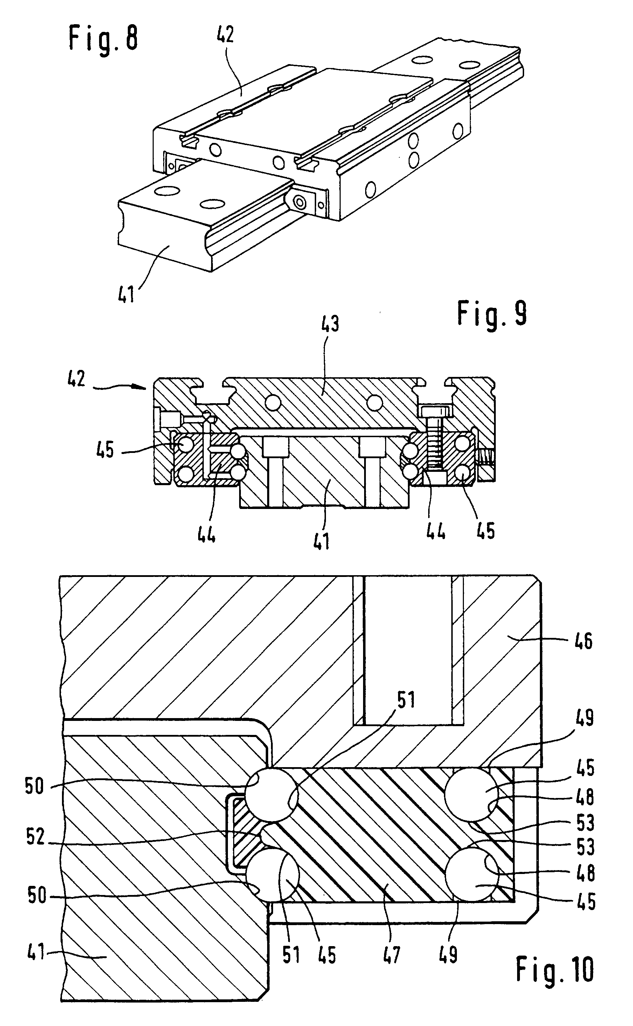

Ein in den Figuren 8 und 9 dargestelltes vorbekanntes Linearwälzlager besteht aus einer Führungsschiene 41 und einem daran abgestützten, in Schienenlängsrichtung verfahrbaren Führungswagen 42. Dieser hat einen die Führungsschiene 41 abdeckenden und teilweise umgebenden Grundkörper 43 und zwei an dem Grundkörper lösbar befestigte Kugelumlaufschuhe 44, die zu beiden Längsseiten der Führungsschiene 41 angeordnet sind und sich dort mit Kugeln 45 abstützen. Die Kugeln 45 sind an jedem Kugelumlaufschuh 44 in zwei endlosen Umläufen angeordnet, wobei jeder Umlauf eine tragende Kugelreihe, eine rücklaufende Kugelreihe und zwei diese Reihen miteinander verbindende Umlenkkugelreihen aufweist. Für die rücklaufenden Kugelreihen sind in den Kugelumlaufschuhen 44 zur Führungsschienenlängsrichtung parallele Bohrungen als Aufnahmekanäle angebracht.

Gegenüber diesem vorbekannten Linearwälzlager zeigt Figur 10 ein erfindungsgemäßes Linearwälzlager, bei welchem der Führungswagen 46 Führungsteile 47 mit jeweils zwei Rücklaufkanälen 48 aufweist, die nach außen geöffnet sind. Jeder Rücklaufkanal 48 hat einen dem Durchmesser der Kugeln 45 entsprechenden inneren Durchmesser und eine radiale Öffnung 49, die sich in Führungsschienenlängsrichtung erstreckt und mit gegenüber dem Kugeldurchmesser geringerer Breite ausgeführt ist. Erfindungsgemäß weist der Rücklaufkanal 48 an seiner von der Öffnung 49 abgewandten Längsseite einen an der Führung der Kugeln 45 mitwirkenden geschlossenen Boden 53 auf, so daß die Kugeln 45 auch dann in dem Rücklaufkanal 48 des Führungsteils 47 gehalten werden, wenn dieses von dem Führungswagen 46 abgenommen wird.

Auf diese Weise werden die Kugeln 45 in den Rücklaufkanälen 48 sicher gehalten. Ein Führungsteil 47 kann jeweils als elastisches Bauteil aus einem Kunststoff oder Metall bestehen. Infolge der Öffnungen 49 läßt es sich mit seinen Rücklaufkanälen 48 in einer Form gut herstellen.

Die tragenden Kugeln 45 stützen sich an Laufbahnen 50 der Führungsschiene und an Laufbahnen 51 des Führungsteils 47 ab. Dieses weist zwischen den beiden Laufbahnen 51 eine vorstehende Nase 52 auf, mit der seine eindeutige Fixierung und Halterung in dem Lager ermöglicht wird.

### Bezugszeichen

- 1: Führungswagen
- 1a: Führungswagen
- 1b: Führungswagen
- 1c: Führungswagen
- 2: Führungsschiene
- 3: Kugel
- 4: innere Umlenkung
- 5: äußere Umlenkung
- 6: Rückhaltesteg
- 7: Führungskontur
- 8: Deckel
- 9: Führungsteil
- 9a: Führungsteil
- 9b: Führungsteil
- 10: Deckel
- 10a: Deckel
- 11: Tragabschnitt
- 12: Ausnehmung (Ansenkung)
- 13: Rücklauf
- 14: Nase
- 15: Schräge
- 16: Tragkörperabschnitt
- 16a: Tragkörperabschnitt
- 17: Führungselement
- 18: Rückhaltesteg
- 18a: Rückhaltesteg
- 19: Umlenkbahn
- 20: Raum für Schmierstoff
- 21: Rundung
- 22: Rundung
- 23: Kanal
- 24: Schräge
- 25: Ausnehmung
- 26: Verengung
- 27: Zentrierung
- 28: Ansatz
- 28a: Ansatz
- 29: Deckel
- 30: Tragbahnabschnitt
- 31: Tragkörper
- 32: Rücklaufkanal
- 33: Grundkörper
- 34: Schraube
- 35: Schraube
- 36: Traglaufbahn
- 37: Rückhaltekante
- 38: Rückhaltekontur
- 41: Führungsschiene
- 42: Führungswagen
- 43: Grundkörper
- 44: Kugelumlaufschuh
- 45: Kugel
- 46: Führungswagen
- 47: Führungsteil
- 48: Rücklaufkanal
- 49: Öffnung
- 50: Laufbahn der Führungsschiene
- 51: Laufbahn des Führungsteils
- 52: Nase
- 53: Boden

## Patentansprüche

1. Linearwälzlager mit einem Führungswagen (1b, 1c, 46), der über Kugeln (3, 45) an einer Führungsschiene (2, 41) abgestützt und längs dieser verfahrbar ist, wobei die Kugeln (3, 45) in Führungsteilen (9, 9a, 9b, 47) gehalten sind, die an dem Führungswagen (1b, 1c, 46) lösbar befestigt und an den mit Laufbahnen (50) versehenen Längsseiten der Führungsschiene (2, 41) angeordnet sind, wobei die Führungsteile (9, 9a, 9b, 47) für jeden endlosen Kugelumlauf eine Laufbahn (51) für tragende Kugeln (3, 45), einen Rücklaufkanal (13, 23, 32, 48) für rücklaufende Kugeln (3, 45) und zwei die Bereiche der tragenden und der rücklaufenden Kugeln (3, 45) miteinander verbindende Umlenkkanäle (19) enthalten und jeweils der in dem Führungsteil (9, 9a, 9b, 47) eingearbeitete Rücklaufkanal (13, 23, 32, 48) eine auf seiner gesamten Länge sich erstreckende Öffnung (49) aufweist, deren Breitenmaß kleiner als der Durchmesser der eingesetzten Kugeln (3, 45) ist, wobei die Öffnung (49) sich auch über die gesamte Länge des jeweiligen Umlenkkanals (19) erstreckt, wobei die Umlenkkanäle (19) und der Rücklaufkanal (13, 23, 32, 48) an ihren von der Öffnung (49) abgewandten Längsseiten einen an der Führung der Kugeln (3, 45) mitwirkenden geschlossenen Boden (53) aufweisen, und im Bereich der Umlenkung und Rückführung für die Kugeln (3) am Führungsteil (9a, 9b) die Öffnung von einer Verengung (26) der Kanäle (23) gebildet ist, welche die Kugelrückhalterung und Führung übernimmt, wobei im Bereich einer Traglaufbahn (36) des Führungsteils (9a, 9b, 47) die Rückhalterung jeweils durch einen von einer Rückhaltekontur 38 seperaten Rückhaltesteg (18a) erfolgt, der mit der Rückhaltkontur (38) einen Abstand bildet, **dadurch gekennzeichnet, daß** der Abstand kleiner als der Durchmesser der Kugeln (3) ist.

2. Linearwälzlager nach Anspruch 1, **dadurch gekennzeichnet, daß** das Führungsteil (9a, 9b) aus elastischem Kunststoff besteht.

3. Linearwälzlager nach Anspruch 1, **dadurch gekennzeichnet, daß** das Führungsteil (9a, 9b) aus Metall besteht und die Verengung (26) durch plastische Formgebung gebildet ist.

4. Linearwälzlager nach Anspruch 1, **dadurch gekennzeichnet, daß** an dem Führungsteil (9) Ansätze (28) angebracht sind, welche im Bereich von Rückläufen (13) in Ausnehmungen (12) des Tragabschnittes (11), diesen zentrierend und fixierend, eingesteckt sind.

5. Linearwälzlager nach Anspruch 1, **dadurch gekennzeichnet, daß** an dem Führungsteil (9a, 9b) auf der Traglaufbahnseite der Rückhaltesteg (18a) kantenlos angeformt ist, welcher Rundungen (21, 22) aufweist, an denen das Führungsteil (9a, 9b) fixiert und gehalten ist.

6. Linearwälzlager nach Anspruch 1, **dadurch gekennzeichnet, daß** an dem Führungsteil (9a, 9b) ein weiteres Führungselement (17) befestigt ist, das einen oder zwei Umläufe aufweist.

## Claims

1. Linear rolling bearing having a guide carriage (1b, 1c, 46) that is supported through balls (3, 45) on a guide rail (2, 41) and can be moved along the guide rail, the balls (3, 45) being retained in guide members (9, 9a, 9b, 47) that are detachably fixed to the guide carriage (1b, 1c, 46) while being arranged on longitudinal sides of the guide rail (2, 41) that contain raceways (50), the guide members (9, 9a, 9b, 47) containing, for each endless circuit of balls, one raceway (51) for load-bearing balls (3, 45), one return channel (13, 23, 32, 48) for returning balls (3, 45) and two deflecting channels (19) that connect the regions of the load-bearing and returning balls (3, 45) to each other, and the return channel 13, 23, 32, 48) made in each guide member (9, 9a, 9b, 47) comprising an opening (49) that extends over its entire length, the width dimension of the opening (49) being smaller than the diameter of the inserted balls (3, 45), said opening (49) also extending over the entire length of the respective deflecting channel (19), the deflecting channels (19) and the return channel (13, 23, 32, 48) comprising on their longitudinal sides turned away from the opening (49), a closed bottom (53) that cooperates in the guidance of the balls (3, 45), and, in the region of deflection and return of the balls (3) on the guide member (9a, 9b), the opening is defined by a narrowing (26) of the channels (23) that takes over the retention and guidance of the balls, while in the region of a load-bearing raceway (36) of the guide member (9a, 9b, 47), retention is effected in each case by a retaining bar (18a) that is separate from a retaining contour (38) and is situated at a distance from the retaining contour (38), **characterised in that** the distance is smaller than the diameter of the balls (3).

2. Linear rolling bearing according to claim 1, **characterised in that** the guide member (9a, 9b) is made of an elastic plastic material.

3. Linear rolling bearing according to claim 1, **characterised in that** the guide member (9a, 9b) is made of metal and the narrowing (26) is formed by plastic shaping.

4. Linear rolling bearing according to claim 1, **characterised in that** extensions (28) are provided on the guide member (9) and inserted in the region of return channels (13) into recesses (12) of the carrier section (11) for centering and fixing the carrier section (11).

5. Linear rolling bearing according to claim 1, **characterised in that** the retaining bar (18a) is formed without edges on the load-bearing raceway side of the guide member (9a, 9b), and said retaining bar comprises rounded portions (21, 22) on which the guide member (9a, 9b) is fixed and retained.

6. Linear rolling bearing according to claim 1, **characterised in that** a further guide element (17) comprising one or two circuits is fixed on the guide member (9a, 9b).

## Revendications

1. Palier linéaire à roulement ayant un chariot de guidage (1b, 1c, 46) qui est supporté par des billes (3, 45) sur un rail de guidage (2, 41) et qui peut être déplacé le long de celui-ci, les billes (3, 45) étant retenues dans des pièces de guidage (9, 9a, 9b, 47) qui sont fixées de manière détachable sur le chariot de guidage (1b, 1c, 46) en étant agencées sur les côtés longitudinaux du rail de guidage (2, 41), lesdits côtés longitudinaux étant munis de pistes de roulement (50), lesdites pièces de guidage (9, 9a, 9b, 47) comprenant, pour chaque circulation de billes sans fin, une piste (51) pour des billes (3, 45) sous charge, un canal de retour (13, 23, 32, 48) pour des billes (3, 45) en retour et deux canaux de renvoi (19) qui relient, l'une à l'autre, les régions des billes (3, 45) sous charge et des billes (3, 45) en retour, chaque canal de retour (13, 23, 32, 48) fait dans la pièce de guidage (9, 9a, 9b, 47) comprenant une ouverture (49) qui s'étend sur sa longueur entière et dont la largeur est inférieure au diamètre des billes (3 45) insérées, ladite ouverture (49) s'étend également sur la longueur entière du canal respectif de renvoi (19), pendant que les canaux de renvoi (19) et le canal de retour (13, 23, 32, 48) possèdent à leur côté longitudinal opposé à l'ouverture (49), un fond (53) fermé qui participe au guidage des billes (3, 45), et, dans la région de renvoi et de retour des billes (3) sur la pièce de guidage (9a, 9b), l'ouverture est formée par un étrécissement (26) des canaux (23), lequel étrécissement assume la retenue et le guidage des billes, pendant que dans la région d'une piste de support (36) de la pièce de guidage (9a, 9b, 47), la retenue est effectuée dans chaque cas par une entretoise de retenue (18a) qui est faite séparément d'un contour de retenue (38) en étant agencée à l'écart de celui-ci, **caractérisé en ce que** l'écart est inférieur au diamètre des billes (3).

2. Palier linéaire à roulement selon la revendication 1, **caractérisé en ce que** la pièce de guidage (9a, 9b) est faite d'une matière synthétique élastique.

3. Palier linéaire à roulement selon la revendication 1, **caractérisé en ce que** la pièce de guidage (9a, 9b) est faite en métal, et l'étrécissement (26) est formé par façonnage plastique.

4. Palier linéaire à roulement selon la revendication 1, **caractérisé en ce que** des embouts (28) sont prévus sur la pièce de guidage (9)) en étant insérés, à la région des canaux de retour (13), dans des évidements (12) de la section de support (11) pour centrer et fixer celle-ci.

5. Palier linéaire à roulement selon la revendication 1, **caractérisé en ce que** l'entretoise de retenue (18a) est formée sans arêtes sur la pièce de guidage (9a, 9b) du côté piste de support de celle-ci, et ladite entretoise de retenue (18a) comprend des arrondissages (21, 22) sur lesquels est fixée et retenue la pièce de guidage (9a, 9b).

6. Palier linéaire à roulement selon la revendication 1, **caractérisé en ce qu'**un autre élément de guidage (17) comprenant un ou deux circulations est fixé à la pièce de guidage (9a, 9b).
